# EUROPÄISCHE PATENTSCHRIFT

(11) **EP 1 328 410 B1**
(45) Veröffentlichungstag und Bekanntmachung des Hinweises auf die Patenterteilung: **19.01.2005**
(21) Anmeldenummer: 01973800.4
(22) Anmeldetag: 15.10.2001
(51) Int. Cl.: B60B 7/20

(54) **RADVERKLEIDUNG ZUR ABDECKUNG DER FELGE EINES FAHRZEUGRADES**
WHEEL COVER FOR COVERING THE RIM OF A VEHICLE WHEEL
GARNITURE DE ROUE DESTINEE A RECOUVRIR LA JANTE D'UNE ROUE DE VEHICULE

(30) Priorität: 17.10.2000 AT 20001782; 02.08.2001 AT 20011207
(43) Veröffentlichungstag der Anmeldung: 23.07.2003
(73) Patentinhaber: Eurotrade Handels- und Dienstleistungs GmbH, 8114 Friesach (AT)
(72) Erfinder: Litzka, Bernd, 1020 Wien (AT)
(74) Vertreter: Patentanwälte BARGER, PISO & PARTNER
(86) Internationale Anmeldenummer: PCT/AT2001/000333
(87) Internationale Veröffentlichungsnummer: WO 2002/032694

(56) Entgegenhaltungen:
- EP-A- 1 053 893
- US-A- 3 722 958
- US-A- 6 048 036
- PATENT ABSTRACTS OF JAPAN vol. 010, no. 081 (M-465), 29. März 1986 (1986-03-29) & JP 60 222301 A (YUTAKA MATSUSHITA), 6. November 1985 (1985-11-06)

## Beschreibung

Die Erfindung betrifft eine Radverkleidung zur Abdeckung der Felge eines Fahrzeugrades mit einer eine Lagernabe aufweisenden Trägerplatte, die mit der mittels Radschrauben auf einer Radachse befestigten Felge verbunden ist, einem auf der Lagernabe befestigten Kugellager, an dessen Außenring eine Halterung fixiert ist, die eine Radverkleidungsplatte trägt, und ein mit der Radverkleidungsplatte verbundenes Exzentergewicht umfaßt, wobei die Trägerplatte mit den Köpfen der Radschrauben lösbar verbunden ist. Eine derartige, gattungsgemäße Radverkleidung ist aus der JP 60 222 301 A bekannt.

Die US 5,190,354 A offenbart eine Radverkleidung, die über ein spangenförmiges Verbindungselement, welches zwischen den Radschrauben und der Radfelge eingespannt wird, ein Radnaben-Element trägt, auf dem sich drehbar gelagert eine Radverkleidungsplatte mit fix montiertem Gewicht befindet. Die gesamte Konstruktion ist durch formschlüssige Verbindungselemente gekennzeichnet.

Die DE 298 14 332 U1 beschreibt eine nicht rotierende Radkappe aus Aluminium mit spezieller Befestigungseinrichtung sowie batteriebetriebener Beleuchtung. Eine Befestigungsplatte wird zwischen Radschrauben und Radfelge eingespannt und trägt eine Radnabe, auf der drehbar eine Aluminiumkappe mit einem fix verschraubten Gewicht gelagert ist.

Die DE 197 58 093 A1 beschreibt ein drehbar gelagertes Emblem in der Felgenmitte, welches mit einem fix befestigten Gewicht in einer Frostschutzwassermischung läuft.

In der DE 2 415 972 A1 ist ein drehbar gelagerter und direkt auf einer feststehenden Achse montierter Radverkleidungsteil geoffenbart. Neben der Montage direkt am Achszapfen eines Rades erfolgt auch hier die Stabilisierung in eine horizontal ausgerichtete Position durch ein fix montiertes Exzentergewicht.

Die WO 98/54005 A1 beschreibt eine Radverkleidung, welche mit einem drehbar gelagerten Gewicht in der Lage ist, einen Radverkleidungsausschnitt in horizontal ausgerichteter Position zu halten. Die Montage dieser Erfindung erfolgt über radial angeordnete Spannschrauben auf dem Innenumfang einer Felge.

Die GB 2 337 233 A beschreibt eine Anordnung, bei der über ein fix an der Radverkleidungsp
latte montiertes Gewicht die horizontale Ausrichtung der nicht mitrotierenden Radkappe erreicht wird. Eine Lagerung der Radverkleidungsplatte samt Gewicht in einem gekapselten Flüssigkeitsbad wird vorgeschlagen.

Die EP 0 982 154 A2 beschreibt eine nichtrotierende Radkappe mit einer durch einen Generator betriebenen Beleuchtung von der Rückseite der Radverkleidungsplatte, sowie einem Lüftungskanal zur Einleitung von Fahrtwind hinter die Radverkleidungsplatte. Auch hier ist das Exzentergewicht fix mit der Radverkleidungsplatte oder der Trägerplatte verbunden und die Montage erfolgt über eine spangenförmige Befestigungsklammer an der Felge.

In der US 5 490 342 A ist eine Radverkleidungsplatte dargestellt, die fix am Außenrand einer Felge festgeklemmt wird und eine zentral angeordnete, kugelgelagerte Trägerplatte für ein exzentrisch angeordnetes Gewicht aufnimmt.

In der US 4 280 293 ist eine Radverkleidungsplatte geoffenbart, die durch ein fix montiertes Exzentergewicht und eine Flüssigkeitsdämpfung mit Quecksilber oder ähnlichen Flüssigkeiten charakterisiert ist. Die drehbare Lagerung erfolgt über ein Naben-Element, auf dem ein Kugellager sitzt. Das Naben-Element wird durch eine zentrische Schraube auf einer feststehenden Radkappe fixiert.

Die US 5 659 989 A beschreibt mehrere Lösungen einer nicht rotierenden Radverkleidungsplatte. Bei allen Varianten liegt ein Naben-Element vor, welches entweder am Felgenrand festgeklemmt wird oder über eigens in der Radfelge angebrachte Bohrungen festgeschraubt wird. Die Radverkleidungsplatte wird auch hier über Kugellagerung und ein fix montiertes Gewicht in eine horizontale Position gezwungen.

In der US 5 588 715 ist eine nichtrotierende Radverkleidungsplatte beschrieben, die über eine Trägerplatte ein Naben-Element aufweist, über das mittels Kugellagerung die Radverkleidungsplatte durch ein fixes Gewicht in eine horizontale Position gezwungen wird. Die Trägerplatte wird bei dieser Konstruktion in eine zentrische Ausnehmung hinter der Felge montiert. Merkmal der Montage ist hier, daß die Trägerplatte zwischen Felge und Achsteil eingeklemmt ist oder in einer zweiten Variante direkt mit dem Achszapfen verbunden wird.

Die WO 00/09347 A offenbart eine nicht rotierende gekapselte Radkappe, die dadurch gekennzeichnet ist, daß das Gewicht zur horizontalen Ausrichtung der Radverkleidungsplatte nicht direkt fixiert ist, sondern indirekt über einen eingelenkigen Pendelarm schwingen kann. Dadurch bewirken unterschiedliche Trägheitsmomente zwischen Radverkleidungsplatte und Gewicht eine gedämpfte Auslenkung beim Anfahren oder Bremsen.

In der DE 41 01 726 A1 ist eine Radkappe für Kraftfahrzeuge geoffenbart, die mittels einer Aufnahme- und einer Sperrvorrichtung auf einem Kugellager befestigt ist, das seinerseits auf einer Achse einer Radnabe fixiert ist. Auch hier erfolgt die Montage der Trägerplatte zwischen Radschrauben und Felge. Das Gewicht zur Stabilisierung der Radverkleidungsplatte ist ebenfalls fix mit der Radverkleidungsplatte verbunden, kann sich jedoch bei erzwungenem Mitdrehen durch auftretende Zentrifugalkräfte radial verschieben und damit die Verbindung mit dem Kugellager und damit auch mit der Radfelge lösen.

Die US 4,884,933 beschreibt eine Klemmvorrichtung für Radschraubenköpfe, die durch eine axial angeordnete Spannschraube über den Radschraubenköpfen festgespannt wird. Diese lösbare Verbindung dient zur Befestigung von Gleitschutzvorrichtungen für Fahrzeugräder auf Eis- und Schneeflächen.

Aus den angeführten Dokumenten geht hervor, daß sowohl Naben-Elemente, Kugellager als auch darauf montierte Radverkleidungsplatten bekannt sind. Bisheriger Stand der Technik ist die Montage der Trägerplatte zwischen Radschrauben und Felgen oder zwischen Felgen und Achsteil. Zum Stand der Technik ist weiters die Montage von Gewichten mit der Radverkleidungsplatte zu zählen. Dabei besteht das Problem, daß beim erzwungenen Mitdrehen der Radverkleidung mit der Felge einseitige ungewuchtete Zentrifugalkräfte auftreten. Die Trennung der Radverkleidungsplatte vom Kugellager oder die schwenkbare einseitige Lagerung des Gewichtes alleine reicht hier nicht zur Lösung des Problems aus, da die Radverkleidungsplatte oder das Gewicht selbst zum Mitdrehen mit der Felge gezwungen werden kann. Stand der Technik ist weiters die Montage einer Montageplatte für Gleitschutzvorrichtungen unabhängig von der Bauart der Felge, indem eine Klemmvorrichtung über den Radschraubenköpfen festgespannt wird.

Aufgabe der Erfindung ist die Minimierung und Eliminierung möglicher auftretender ungewuchteter Zentrifugalkräfte beim erzwungenen Mitdrehen der Radverkleidungsplatte sowie eine verlustsichere und diebstahlsichere Verbindung der Radverkleidung mit der Felge. Eine weitere Aufgabe dieser Erfindung ist die Montage der Trägerplatte oder des Naben-Elementes unabhängig von der Bauart der Felge derart zu gestalten, daß eine minimale Dicke der Konstruktion erreicht wird, damit die Radverkleidungsplatte nicht oder nur gering über den Gummireifen axial hinausragt.

Die Lösung der gestellten Aufgaben besteht gemäß der Erfindung darin, daß zwei Exzentergewichte an der der Trägerplatte zugekehrten Innenseite der Radverkleidungsplatte in Umfangsrichtung schwenkbar gelagert angeordnet sind, wobei die Schwenkachse des einen Exzentergewichts der Schwenkachse des anderen Exzentergewichts diametral gegenüberliegend in gleichem Abstand von der Drehachse des Rades angeordnet sind.

Gemäß eines weiteren Merkmals der Erfindung ist die Trägerplatte mit kappenförmigen Klemmvorrichtungen verbunden, die jeweils form- oder kraftschlüssig die Köpfe der Radschrauben übergreifend an den Köpfen festgeklemmt sind. Nach einer anderen Ausführungsform der Erfindung sind in den Köpfen der Radschrauben Gewindebohrungen vorgesehen, wobei die Trägerplatte mittels in die Gewindebohrungen der Radschrauben eingreifender Verbindungsschrauben befestigt ist.

Bedingt durch die Montage der erfindungsgemäßen Radverkleidung über die Köpfe der Radschrauben ergibt sich, daß die Montage unabhängig von der Konstruktion der Felge erfolgt, ein optimaler Wärmeübergang auf die Radverkleidungsplatte erreicht wird und eine Hinterlüftung der Radverkleidungsplatte möglich ist, wodurch ein Kühleffekt von auftretender Bremswärme eintritt. Außerdem wird die Verbindung zwischen der Radfelge und den Radschrauben eines Fahrzeuges nicht verändert wodurch weder das Bremsverhalten noch das Fahrverhalten des Fahrzeuges beeinflusst wird.

Die Eliminierung ungewuchteter Zentrifugalkräfte des Gewichtes beim Mitdrehen der Radverkleidungsplatte wird durch die besonders ausgeführten, exzentrisch drehbar gelagerten Gewichte erreicht, welche sich im Falle des Mitdrehens der Radverkleidungsplatte selbständig wuchten.

Nach einem weiteren Merkmal der Erfindung weist die Trägerplatte symmetrisch, auf konzentrischen Lochkreisen angeordnete, vorzugsweise als Senkbohrungen ausgebildete Löcher zur Aufnahme der Verbindungsschrauben auf.

Nach einer weiteren Ausgestaltung der Erfindung ist die die Radverkleidungsplatte tragende Halterung ein kraftschlüssig oder formschlüssig auf dem Außenring des Kugellagers fixiertes Spannring-Element oder fixierter Gehäusering.

Durch die erfindungsmässige Verbindung der Radverkleidungsplatte und des Spannring-Elementes mit dem Kugellager wird nicht nur eine vibrationssichere Verbindung, sondern auch eine besonders dünne Abmessung der Konstruktion erreicht, weshalb die Montage auf handelsüblichen Radfelgen möglich ist, wodurch die Radverkleidungsplatte über die Reifenwölbung nicht oder minimal axial herausragt.

Die Erfindung besteht ferner darin, daß das Exzentergewicht ein kreissegrnentartiges Flachstück ist. Nach einer weiteren Ausgestaltung der Erfindung weist jedes kreissegmentartige Flachstück an seinem Kreisumfangsabschnitt jeweils eine Ausnehmung auf. Nach einer weiteren Ausgestaltung der Erfindung wirkt diese Ausnehmung mit einem an der Trägerplatte zugekehrten Innenseite der Radverkleidungsplatte angeordneten Führungselement zusammen.

Die Erfindung besteht weiters darin, daß die beiden einander gegenüberliegenden Exzentergewichte durch eine Zugfeder zueinander gespannt werden, um Vibrationen zu eliminieren und die Schwingungseigenschaften der Radverkleidungsplatte und der Gewichte derart zu beeinflussen, daß sich die Radverkleidung im Normalbetrieb nicht mit der Felge mitdreht jedoch nach erzwungenem Mitdrehen der Radverkleidung und der Abnahme der Umdrehungsgeschwindigkeit der Radverkleidungsplatte, sich die Gewichte wieder selbständig in die exzentrische Position ausrichten.

Die drehbar exzentrisch angeordnete Lagerung der Exzentergewichte bewirkt ein Ausschwenken der Gewichte, die in ihrer ausgeschwenkten Stellung derart ausgerichtet sind, daß sich die bei der Rotation der Radverkleidungsplatten auftretenden Zentrifugalkräfte der Gewichte gegenseitig aufheben sowie die Zugfeder spannen und ein gewuchtetes Mitdrehen der Radverkleidungsplatte mit dem Achsteil gewährleisten.

Nach einer weiteren Ausgestaltung der Erfindung liegen die Exzentergewichte in ihrer Ruhestellung mit den einander zugekehrten Kanten an einem an der Innenseite der Radverkleidungsplatte angeordneten Dämpfungselement an. Dadurch wird ein durch das Aneinanderstoßen der Exzentergewichte beim Zurückkehren in ihre Ausgangsstellung verursachter Schlag wirksam gedämpft.

Die erfindungsgemäße Radverkleidung ist ferner dadurch gekennzeichnet, daß an der der Radfelge zugewandten Seite der Radverkleidungsplatte zwei die Schwenkbewegung der Exzentergewichte begrenzende Anschläge befestigt sind. Die Anschläge sind an der Innenseite der Radverkleidungsplatte symmetrisch angeordnet, um die Auslenkung der Exzentergewichte beim erzwungenen Mitdrehen zu begrenzen.

Nach einem weiteren Ausführungsform der Erfindung sind die beiden Exzentergewichte im dem Dämpfungselement zugekehrten Bereich und im Abstand von der Drehachse des Rades durch eine jeweils an einem Exzentergewicht angreifende Zugfeder aneinadergespannt.

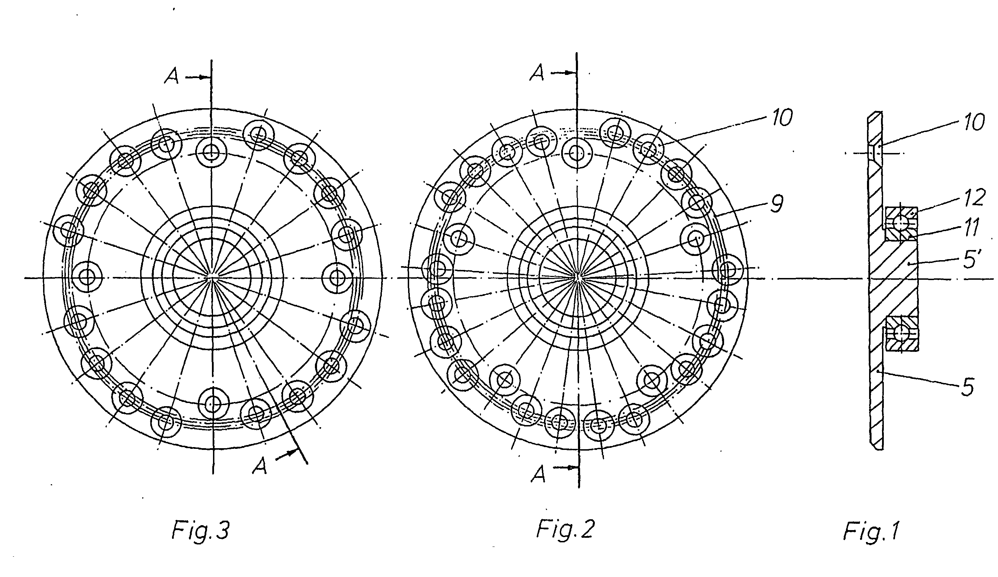

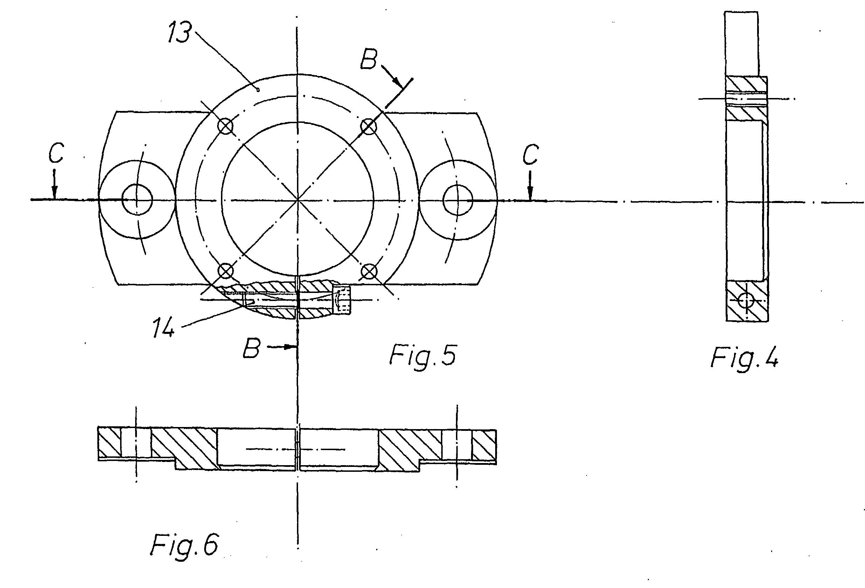

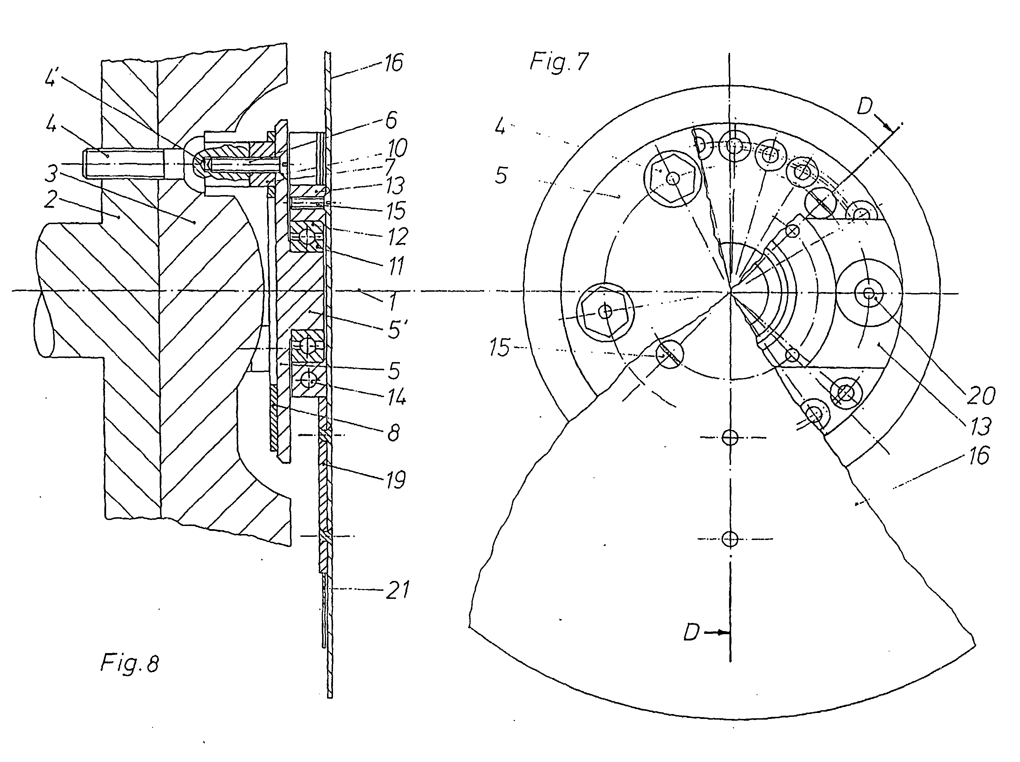

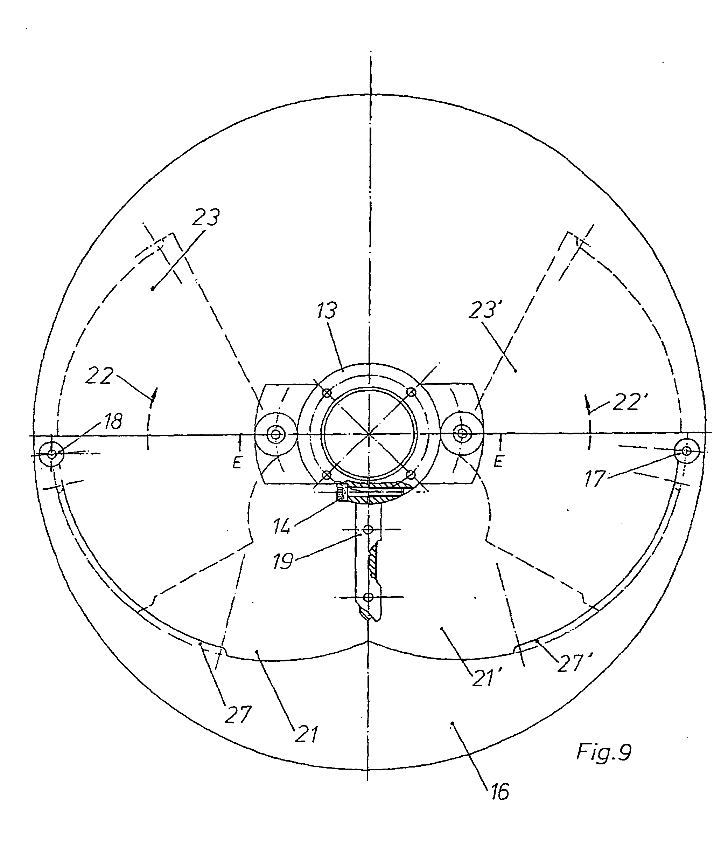

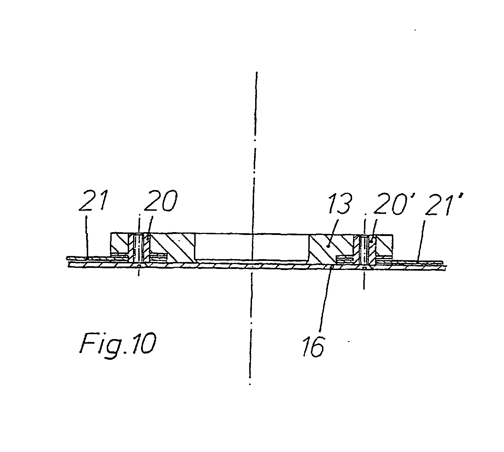

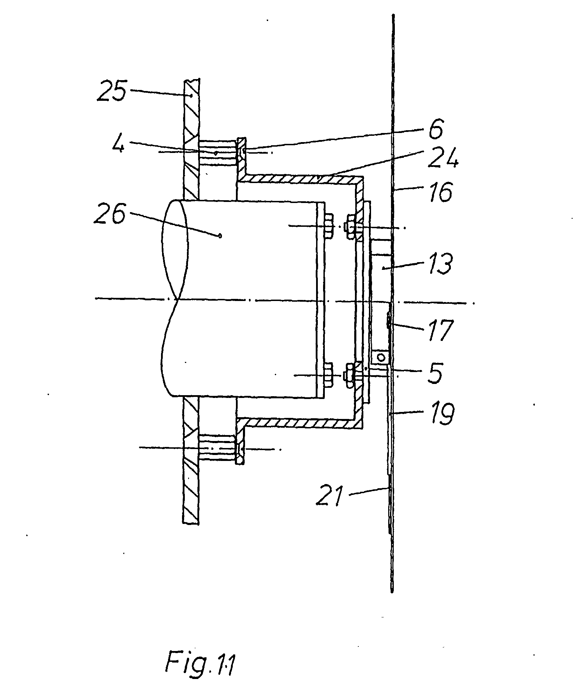

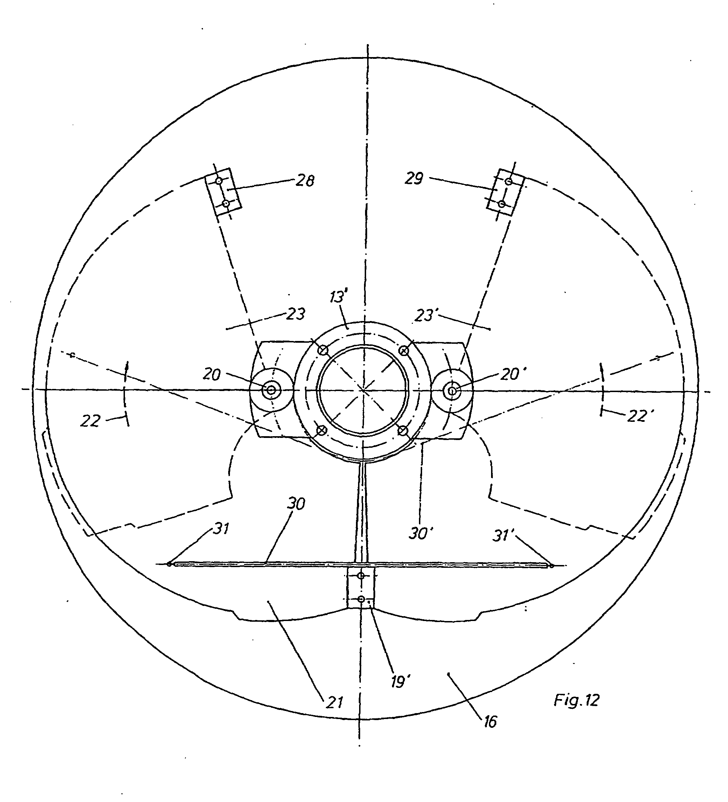

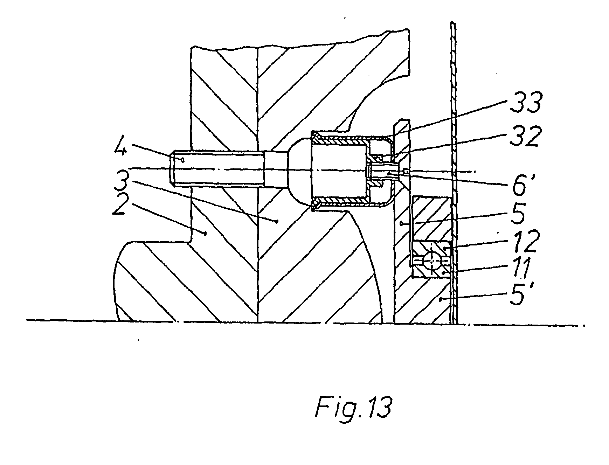

Die Erfindung ist anhand folgender Zeichnungen näher erläutert, worin Fig. 1 eine Trägerplatte einer erfindungsgemäßen Radverkleidung im Schnitt entlang der Linie A-A von Fig. 2 und 3, Fig. 2 und 3 jeweils eine Draufsicht einer Trägerplatte, Fig. 4 eine Schnittdarstellung entlang der Linie B-B von Fig. 5 eines Spannring-Elementes der erfindungsgemäßen Radverkleidung, Fig. 5 eine Draufsicht eines Spannring-Elementes der erfindungsgemäßen Radverkleidung, Fig. 6 eine Schnittdarstellung entlang der Linie C-C von Fig. 5 des Spannring-Elementes, Schnittdarstellung Fig. 7 eine Draufsicht der an einer Radfelge montierten Radverkleidung gemäß der Erfindung, Fig. 8 eine Schnittdarstellung entlang der Linie D-D von Fig. 7 der an einer Radfelge montierten Radverkleidung gemäß der Erfindung, Fig. 9 eine Hintenansicht der Radverkleidungsplatte mit daran angeordneten Exzentergewichten und aufgestecktem Spannring-Element, Fig. 10 eine Schnittdarstellung entlang der Linie E-E von Fig. 9, Fig. 11 eine Schnittdarstellung einer anderen Ausführungsform der Montage der erfindungsgemäßen Radverkleidung, Fig. 12 eine Hintenansicht der Radverkleidungsplatte mit daran angeordneten Exzentergewichten in einer anderen Ausführungsform als Fig. 9 und Fig. 13. eine Schnittdarstellung einer anderen Ausführungsform der Montage als in Fig. 8 dargestellt, zeigen.

Fig. 8 zeigt die, an einer Drehachse 1 eines Rades stimseitig angeordnete Konstruktion einer erfindungsgemäßen Radverkleidung. Auf einem Achsteil 2 ist eine Radfelge 3 durch Radschrauben 4, deren Schraubenköpfe jeweils eine zentrale Gewindebohrung 4' aufweisen, montiert. Die Gewindebohrungen 4' der Radschrauben 4 dienen zur Aufnahme einer eine Lagernabe 5' tragende Trägerplatte 5 (Fig. 1, 2, 3). Die Verbindung der Trägerplatte 5 mit der Radfelge 3 erfolgt über Schrauben 6, die in den in den Radschraubenköpfen vorgesehenen Gewindebohrungen 4'der Schrauben 4 fixiert sind.

Fig. 13 zeigt eine weitere Ausführungsform der Erfindung die darin besteht, daß über den Köpfen der Radschrauben 4 Klemmvorrichtungen 32, 33 über Schrauben 6' festgespannt sind, welche eine Verbindung der Trägerplatte 5 mit der Ragfelge 3 darstellen. Die Klemmvorrichtung 32 ist mittels einer in die stimseitig eingreifenden Schraube 6' mit der Trägerplatte 5' verbunden. Die Klemmvorrichtung besteht aus einem direkt am Kopf der Radschraube 4 anliegenden kappenförmigen Element 32, dessen Mantel geschlitzt ist. Der Mantel weist einen nach außen gebogenen Rand auf und ist auf der dem Kopf der Radschraube 4 zugewandten Innenseite zur Rutschsicherung mit Profilierungen versehen. Eine das kappenförmige Element 32 überstülpende topfartige Hülse 33 schiebt sich bei Spannung der Schraube 6' über den nach außen gebogenen Rand des kappenförmigen Elementes 32 und fixiert damit die Klemmvorrichtung am Kopf der Radschraube 4.

Dabei dienen Abstandshalter 7, welche an einem Ring 8 lochkreisförmig angeordnet sein können als Distanz-Elemente. Die Abstandshalter 7 sind optionale Bestandteile der Radverkleidung, um eine Anpassung an handelsübliche Radfelgen 3 (Fig. 7, 8, 13) zu ermöglichen. Bei besonders ausgeführten Radfelgen 25, z.B. von Lastkraftwagen oder Geländewagen, mit vorspringendem Achsteil 26 oder großer Distanz zwischen Radverkleidungsplatte und Radschraubenkopf wird vorteilhafterweise zur Befestigung der Trägerplatte 5 ein vorzugsweise hutförmiger Distanzhalter 24 (Fig. 11) verwendet oder werden längere Abstandshalter 7 verwendet.

Die Trägerplatte 5 weist symmetrisch, auf Lochkreisen 9 angeordnete Senkbohrungen 10 zur Aufnahme der Verbindungsschrauben 6 auf (Fig. 2, 3). Auf der Lagernabe 5' der Trägerplatte 5 ist ein Kugellager aufgesetzt, wobei der Innenring 11 kraftschlüssig oder formschlüssig auf der Lagemabe 5' fixiert ist. Auf dem Außenring 12 des Kugellagers sitzt ein Spannring-Element 13. Das Spannring-Element 13 wird durch eine Spannschraube 14 (Fig. 5, 6) kraftschlüssig auf dem Außenring 12 des Kugellagers fixiert. Nach einer weiteren Ausführungsform (Fig. 12) der Erfindung ist ein Gehäusering 13' kraftschlüssig oder formschlüssig auf dem Außenring 12 des Kugellagers fixiert.

Das Spannring-Element 13 nimmt über Schrauben 15, welche nach einer weitem Ausführung der Erfindung als Sicherheitsschrauben ausgebildet sind, eine Radverkleidungsplatte 16 auf. Die Radverkleidungsplatte 16 dient auf der, von der Radfelge 3 abgewandten Seite als Träger für optische Gestaltungsmöglichkeiten, die auch während der Drehung des Achsteils 2 in zumindest im wesentlichen unveränderter Stellung lesbar verharrt.

In Fig. 9 wird gezeigt, daß an der der Radfelge 3 zugewandten Seite der Radverkleidungsplatte 16 Führungs-Elemente 17 und 18 sowie das Führungs- und Dämpfungs-Element 19 befestigt sind. Das Dämpfungs-Element 19 ist als schlagabsorbierender Puffer ausgebildet, an dem die als kreissegmentförmige Flachstücke, z.B. aus Stahlblech, ausgebildeten Exzentergewichte 21, 21' in ihrer Ruhestellung anliegen. Die Gewichte 21, 21' weisen am Kreisumfangsabschnitt ausgebildete Ausnehmungen 27, 27' (Fig. 9) auf, entlang derer sich die Gewichte 21, 21' über Führungs-Elemente 17 und 18 frei verschieben können. Um die Radverkleidungsplatte 16 in einer stabilen, horizontal ausgerichteten Position zu halten, sind über die Achsen 20, 20' (Fig. 9), welche fix mit der Radverkleidungsplatte 16 verbunden sind, die symmetrisch, exzentrisch angeordneten Gewichte 21, 21' drehbar gelagert (Fig. 10). Die Achsen 20, 20' sind derart konstruiert, daß sie bei der Montage der Radverkleidungsplatte 16 mit dem Spannring-Element 13 als Führungsbolzen dienen.

Fig. 12 zeigt gemäß einer weiteren Ausführungsform der Erfindung, daß an der der Radfelge 3 zugewandten Seite der Radverkleidungsplatte 16 Dämpfungs-Element 19', und zwei die Schwenkbewegung der Exzentergewichte 21, 21' begrenzende Anschläge 28 und 29 befestigt sind. Das Dämpfungs-Element 19', ist als schlagabsorbierender Puffer ausgebildet, an dem die als kreissegmentförmige Flachstücke, z.B. aus Stahlblech, ausgebildeten Exzentergewichte 21, 21', welche durch eine Zugfeder 30 über Haltevorrichtungen 31, 31' aneinandergespannt sind, in ihrer Ruhestellung anliegen. Die Anschläge 28 und 29 sind derart angeordnet, daß sie die Auslenkung der symmetrisch, exzentrisch angeordneten Gewichte bei Ihrer Ausschwenkung entlang der Drehrichtungs-Pfeile 22, 22' bis zur Position 23 und 23' und die Dehnung der Zugfeder 30 bis Position 30' begrenzen.

Die drehbare, exzentrisch angeordnete Lagerung der Gewichte 21, 21' bewirkt im Falle eines extern erzwungenen Mitdrehens der Radverkleidungsplatte 16 mit der Radfelge 3 ein Ausschwenken in Richtung der Drehrichtungs-Pfeile 22, 22' der Gewichte 21, 21' sowie eine Dehnung der Zugfeder 30 in Position 30'. In der ausgeschwenkten Position 23, 23' sind die Gewichte derart ausgerichtet, daß sich die bei Rotation der Radverkleidungsplatten 16 auftretenden Zentrifugalkräfte der Gewichte 21, 21' gegenseitig aufheben und ein gewuchtetes Mitdrehen der Radverkleidungsplatte 16 mit dem Achsteil 2 erlauben.

Die Montage der Trägerplatte erfolgt derart, daß in den Köpfen der Radschrauben Gewindebohrungen vorgesehen sind, daß die Trägerplatte mittels in die Gewindebohrungen der Radschrauben eingreifenden Verbindungsschrauben befestigt ist. Nach einer weiteren Ausführung erfolgt die Montage der Trägerplatte derart, daß über den Köpfe der Radschrauben Klemmvorrichtungen festgespannt sind, daß die Trägerplatte mittels in die Gewindebohrungen der Klemmvorrichtung eingreifenden Verbindungsschrauben befestigt ist.

## Patentansprüche

1. Radverkleidung zur Abdeckung der Felge eines Fahrzeugrades, mit einer eine Lagernabe aufweisenden Trägerplatte (5), die mit der mittels Radschrauben (6) auf einer Radachse befestigten Felge verbunden ist, einem auf der Lagernabe befestigten Kugellager (11,12), an dessen Außenring (12) eine Halterung (13) fixiert ist, die eine Radverkleidungsplatte (16) trägt, und ein mit der Radverkleidungsplatte (16) verbundenes Exzentergewicht (21, 21') umfaßt, wobei die Trägerplatte (5) mit den Köpfen der Radschrauben lösbar verbunden ist, **dadurch gekennzeichnet, daß** zwei Exzentergewichte (21, 21') an der der Trägerplatte (5) zugekehrten Innenseite der Radverkleidungsplatte (16) in Umfangsrichtung schwenkbar gelagert angeordnet sind, wobei die Schwenkachsen (20, 20') der Exzentergewichte (21, 21') einander diametral gegenüberliegend in gleichem Abstand von der Drehachse (1) des Rades angeordnet sind.

2. Radverkleidung nach Anspruch 1, **dadurch gekennzeichnet, daß** die Trägerplatte (5) mit kappenförmigen Klemmvorrichtungen (32, 33) verbunden ist, die jeweils formoder kraftschlüssig die Köpfe der Radschrauben übergreifend an den Köpfen festgeklemmt sind.

3. Radverkleidung nach Anspruch 1, **dadurch gekennzeichnet, daß** in den Köpfen der Radschrauben (4) Gewindebohrungen (4') vorgesehen sind und daß die Trägerplatte (5) mittels in die Gewindebohrungen (4') der Radschrauben (4) eingreifender Verbindungsschrauben (6) befestigt ist

4. Radverkleidung nach Anspruch 3, **dadurch gekennzeichnet, daß** die Trägerplatte (5) symmetrisch, auf konzentrischen Lochkreisen (9) angeordnete, vorzugsweise als Senkbohrungen (10) ausgebildete Löcher zur Aufnahme der Verbindungsschrauben (6) aufweist.

5. Radverkleidung nach einem der Ansprüche 1 bis 4, **dadurch gekennzeichnet, daß** die die Radverkleidungsplatte (16) tragende Halterung (13) ein kraftschlüssig auf dem Außenring (12) des Kugellagers fixiertes Spannring-Element (13) oder fixierter Gehäusering 13' ist.

6. Radverkleidung nach einem der Ansprüche 1 bis 5, **dadurch gekennzeichnet, daß** die Exzentergewichte (21, 21') kreissegmentartige Flachstücke sind.

7. Radverkleidung nach Anspruch 4, **dadurch gekennzeichnet, daß** jedes kreissegmentartige Flachstück (21, 21') an seinem Kreisumfangsabschnitt jeweils eine mit einem an der der Trägerplatte (5) zugekehrten Innenseite der Radverkleidungsplatte (16) angeordneten Führungselement (17, 18) zusammenwirkende Ausnehmung (27) aufweist.

8. Radverkleidung nach einem der Ansprüche 1, 4 oder 5, **dadurch gekennzeichnet, daß** die Exzentergewichte (21, 21') in ihrer Ruhestellung mit den einander zugekehrten Kanten an einem an der Innenseite der Radverkleidungsplatte (16) angeordneten Dämpfungselement (19, 19') anliegen.

9. Radverkleidung nach einem der Ansprüche 1, 4 oder 5, **dadurch gekennzeichnet, daß** an der der Radfelge 3 zugewandten Seite der Radverkleidungsplatte 16 zwei die Schwenkbewegung der Exzentergewichte 21, 21' begrenzende Anschläge 28, 29 befestigt sind.

10. Radverkleidung nach einem der Ansprüche 6 bis 9, **dadurch gekennzeichnet, daß** die beiden Exzentergewichte (21, 21') im dem Dämpfungselement 19' zugekehrten Bereich und im Abstand von der Drehachse (1) des Rades durch eine jeweils an einem Exzentergewicht (21, 21') angreifende Zugfeder (30) aneinandergespannt sind.

## Claims

1. Wheel cover for covering the rim of a vehicle wheel, having a mounting plate (5) which has a bearing hub and is connected by means of wheel bolts (6) to a rim fastened to a wheel axle, a ball bearing (11, 12) which is fastened to the bearing hub and on whose outer ring (12) a holding device (13) is fixed which bears a wheel-cover plate (16) and comprises an eccentric weight (21, 21') which is connected to the wheel-cover plate (16), the mounting plate (5) being detachably connected to the heads of the wheel bolts, **characterized in that** two eccentric weights (21, 21') are mounted on the inner side, facing the mounting plate (5), of the wheel cover plate (16) so as to be pivotable in the circumferential direction, the pivoting axes (20, 20') of the eccentric weights (21, 21') being arranged diametrically opposite one another at an identical distance from the axis of rotation (1) of the wheel.

2. Wheel cover according to Claim 1, **characterized in that** the mounting plate (5) is connected to cap-like clamping devices (32, 33) which are each clamped fixedly to the heads of the wheel bolts such that they engage over the said heads with a interlocking or force-fitting connection.

3. Wheel cover according to Claim 1, **characterized in that** threaded bores (4') are provided in the heads of the wheel bolts (4), and **in that** the mounting plate (5) is attached by means of connecting screws (6) which engage in the threaded bores (4') of the wheel bolts (4).

4. Wheel cover according to Claim 3, **characterized in that**, in order to accommodate the connecting screws (6), the mounting plate (5) has holes which are arranged symmetrically on concentric pitch circles (9) and are preferably countersunk bores (10).

5. Wheel cover according to one of Claims 1 to 4, **characterized in that** the holding device (13) which bears the wheel-cover plate (16) is a clamping-ring element (13) or housing ring (13') fixed to the outer ring (12) of the ball bearing with a force-fitting connection.

6. Wheel cover according to one of Claims 1 to 5, **characterized in that** the eccentric weights (21, 21') are flat elements in the form of circular segments.

7. Wheel cover according to Claim 4, **characterized in that** each flat element (21, 21') in the form of a circular segment has, on its circular circumferential section, in each case one recess (27) which interacts with a guide element (17, 18) arranged on the inner side, facing the mounting plate (5), of the wheel-cover plate (16).

8. Wheel cover according to one of Claims 1, 4 or 5, **characterized in that** the edges which face one another of the eccentric weights (21, 21') lie, in its position of rest, on a damping element (19, 19') arranged on the inner side of the wheel-cover plate (16).

9. Wheel cover according to one of Claims 1, 4 or 5, **characterized in that** two stops (28, 29) which limit the pivoting movement of the eccentric weights (21, 21') are fastened to the side, facing the wheel rim (3), of the wheel-cover plate (16).

10. Wheel cover according to one of Claims 6 to 9, **characterized in that**, in the region facing the damping element (19') and at a distance from the axis of rotation (1) of the wheel, the two eccentric weights (21, 21') are held against one another by a tension spring (30) acting in each case on one eccentric weight (21, 21').

## Revendications

1. Garniture de roue destinée à recouvrir la jante d'une roue de véhicule, comportant une plaque porteuse (5) comprenant un moyeu de montage et reliée à la jante fixée sur un essieu de roue par l'intermédiaire de vis de roue (6), un roulement à billes (11, 12) fixé sur le moyeu de montage, avec une monture (13) fixée sur la bague extérieure (12), monture qui porte une plaque d'habillage de roue (16) et qui comprend un poids excentrique (21, 21') relié à la plaque d'habillage de roue (16), la plaque porteuse (5) étant reliée de façon détachable aux têtes des vis de roue, **caractérisée en ce que** deux poids excentriques (21, 21') sont agencés en étant montés avec faculté de pivotement en direction périphérique sur le côté intérieur, tourné vers la plaque porteuse (5), de la plaque d'habillage de roue (16), les axes de pivotement (20, 20') des poids excentriques (21, 21') étant agencés diamétralement à l'opposé l'un de l'autre à distance égale de l'axe de rotation (1) de la roue.

2. Garniture de roue selon la revendication 1, **caractérisée en ce que** la plaque porteuse (5) est reliée à des dispositifs de coincement (32, 33) en forme de capuchon, qui sont chacun coincés sur les têtes en coiffant les têtes des vis de roue par coopération de formes ou de forces.

3. Garniture de roue selon la revendication 1, **caractérisée en ce que** des perçages taraudés (4') sont prévus dans les têtes des vis de roue (4), et **en ce que** la plaque porteuse (5) est fixée par des vis de liaison (6) s'engageant dans les perçages taraudés (4') des vis de roue (4).

4. Garniture de roue selon la revendication 3, **caractérisée en ce que** la plaque porteuse (5) présente des trous destinés à recevoir les vis de liaison (6) et ménagés à symétrie, prévus sur des cercles concentriques (9) et réalisés de préférence sous forme de perçages à lamage (10).

5. Garniture de roue selon l'une des revendications 1 à 4, **caractérisée en ce que** la monture (13) portant la plaque d'habillage de roue (16) est un élément à anneau tendeur (13) ou un anneau formant boîtier (13') fixé par coopération de forces sur la bague extérieure (12) du roulement à billes.

6. Garniture de roue selon l'une des revendications 1 à 5, **caractérisée en ce que** les poids excentriques (21, 21') sont des éléments plats en forme de segment de cercle.

7. Garniture de roue selon la revendication 4, **caractérisée en ce que** chaque élément plat en forme de segment de cercle (21, 21') présente sur sa partie périphérique circulaire chacun un évidement (27) qui coopère avec un élément de guidage (17, 18) agencé sur le côté intérieur, tourné vers la plaque porteuse (5), de la plaque d'habillage de roue (16).

8. Garniture de roue selon l'une des revendications 1, 4 ou 5, **caractérisée en ce que** les poids excentriques (21, 21') prennent appui, dans leur position de repos, par les arêtes tournées l'une vers l'autre contre un élément d'amortissement (19, 19') agencé sur le côté intérieur de la plaque d'habillage de roue (16).

9. Garniture de roue selon l'une des revendications 1, 4 ou 5, **caractérisée en ce que** sur le côté, tourné vers la jante de roue (3), de la plaque d'habillage de roue (16) sont fixées deux butées (28, 29) limitant le mouvement de pivotement des poids excentriques (21, 21').

10. Garniture de roue selon l'une des revendications 6 à 9, **caractérisée en ce que** dans la zone tournée vers l'élément d'amortissement (19') et à distance de l'axe de rotation (1) de la roue, les deux poids excentriques (21, 21') sont serrés l'un contre l'autre par des ressorts de traction (30) attaquant respectivement l'un des poids excentriques (21, 21').
